# EUROPÄISCHE PATENTSCHRIFT

(11) **EP 2 454 106 B1**
(45) Veröffentlichungstag und Bekanntmachung des Hinweises auf die Patenterteilung: **13.04.2016**
(21) Anmeldenummer: 10730797.7
(22) Anmeldetag: 12.07.2010
(51) Int. Cl.: B60G 13/00, B60G 15/06, F16F 9/54, B62D 65/12

(54) **KRAFTFAHRZEUG MIT ZUMINDEST EINER AUFNAHME ZUR ANBINDUNG EINES DÄMPFERS**
MOTOR VEHICLE HAVING AT LEAST ONE RECEPTACLE FOR CONNECTIG A DAMPER
VÉHICULE AUTOMOBILE COMPRENANT AU MOINS UN LOGEMENT POUR LE RATTACHEMENT D'UN AMORTISSEUR

(30) Priorität: 15.07.2009 DE 102009033133
(43) Veröffentlichungstag der Anmeldung: 23.05.2012
(73) Patentinhaber: Bayerische Motoren Werke Aktiengesellschaft, 80809 München (DE)
(72) Erfinder: KRAUS, Ernst, 82491 Grainau (DE); GROSSE, Ronny, 82223 Eichenau (DE); WEILER, Juergen, 80637 München (DE); RILL, Roland, 80807 Muenchen (DE)
(74) Vertreter: Frieser, Ralf
(86) Internationale Anmeldenummer: PCT/EP2010/059972
(87) Internationale Veröffentlichungsnummer: WO 2011/006863

(56) Entgegenhaltungen:
- EP-A1- 0 105 232
- EP-A1- 0 558 115
- EP-A1- 1 627 755
- DE-A1- 10 018 058
- US-A1- 2008 197 552

## Beschreibung

Die Erfindung betrifft ein Kraftfahrzeug mit zumindest einer karosserieseitigen Aufnahme zur Anbindung eines Dämpfers nach dem Oberbegriff des Patentanspruchs 1.

Der heutige Entwicklungsstand von Fahrzeugen ist durch die Verwendung von höherfesten Stählen und innovativen Fügetechniken, sowie ausgereiften Karosseriekonzepten so weit fortgeschritten, dass sich die Karosseriesteifigkeit im Vergleich zu älteren Fahrzeuggenerationen nahezu verdoppelt hat.

Bei älteren Fahrzeugen haben die lokalen Steifigkeiten, wie zum Beispiel die Anbindung eines Dämpfers des Fahrwerks zur Karosserie, bei Steifigkeitsmessungen keine bedeutende Rolle gespielt, da sie bei der Verwindungssteifigkeit des gesamten Fahrzeugs nur einen vernachlässigbar kleinen Anteil ausmachten.

Mittlerweile sind die Karosserien so steif und die an sie gerichteten Anforderungen so hoch geworden, dass eine gesamthafte Betrachtung der Karosserie für die Fahrzeugauslegung nicht mehr ausreicht. Dies wurde auch bei Versuchen schnell erkannt, weil die Ergebnisse aus dem Gesamtfahrzeug viel schlechter ausgefallen sind, als die Karosseriesteifigkeit an sich versprach. Es hat sich gezeigt, dass bei der heutigen Karosseriequalität mehrere Faktoren berücksichtigt werden müssen, um die gewünschten Ergebnisse zu erhalten. Dabei spielen die lokalen Anbindungen zwischen Karosserie und Fahrwerk eine hervorgehobene Rolle und tragen zum Fahrkomfort, zur Fahrdynamik und zur Fahrfreude einen erheblichen Anteil bei.

Üblicherweise wird bei einer Hinterradaufhängung ein so genanntes Federbein (Feder und Dämpfer koaxial) verwendet. Dies bedeutet, dass das Verhältnis zwischen Einfederweg und Dämpferbewegung 1:1 beträgt. Eine solche Anordnung ist beispielsweise aus der DE 100 18 058 A1 bekannt. Hierdurch ergeben sich die besten Eigenschaften bezüglich des Ansprechverhaltens der Feder und des Dämpfers, sowie bezüglich der Eigenschwingungsdämpfung, was optimalen Fahrkomfort bzw. Fahrdynamik mit sich bringt.

Durch diese Auslegung wird im Hinterbau eine verhältnismäßig große karosserieseitige Federbeinaufnahme benötigt, die das Federbein aufnimmt. Dies wiederum bedeutet Abstriche in der Breite der Durchlade, weil das Federbein und die karosserieseitige Federbeinaufnahme in Fahrzeugquerrichtung Bauraum benötigen. Aus diesem Grund wird die Lösung mit dem Federbein hauptsächlich bei Limousinen verwendet. Bei Touring-Fahrzeugen dagegen ist das Durchlademaß von großer Bedeutung. Um möglichst viel Platz für die Durchlade zwischen Kofferraum und Fahrgastraum zu schaffen, müssen Feder und Dämpfer voneinander getrennt werden. Der Dämpfer wird weiterhin im Radhaus abgestützt, während die Feder nach unten rutscht und an der Achse an einem Querlenker aufgenommen wird.

Aufgabe der Erfindung ist es, ein Kraftfahrzeug mit zumindest einer karosserieseitigen Aufnahme zur Anbindung eines Dämpfers zu schaffen, das eine besonders hohe Steifigkeit der Anbindung ermöglicht.

Diese Aufgabe wird mit einem Kraftfahrzeug mit zumindest einer Aufnahme zur Anbindung eines Dämpfers mit den Merkmalen des Patentanspruchs 1 gelöst.

Die Anbindung eines Dämpfers an eine karosserieseitige Aufnahme ist dann besonders steif, wenn sowohl unter Zugbelastung als auch unter Druckbelastung keine lokalen Spalte zwischen diesen beiden Bauteilen entstehen. Erfindungsgemäß ist die Anlagefläche zwischen der Aufnahme und dem Dämpfer so gestaltet, dass bei an der Aufnahme anliegendem Dämpfer im unbelasteten Zustand vor dem Verschrauben im Bereich der Verschraubungsstellen zwischen dem Dämpfer und dem Stützlager sich jeweils ein Spalt befindet, der nach dem Verschrauben aufgrund einer elastischen Verformung der Aufnahme und / oder des Dämpfers geschlossen ist. Durch die entsprechende Gestaltung der Anlageflächen wird so eine möglichst gleichmäßige Vorspannung zwischen dem Dämpfer und der Aufnahme bereits im unbelasteten Zustand erzeugt. Die Vorspannung sorgt dafür, dass auf der kompletten Anlagefläche eine möglichst optimale Flächenpressung entsteht. Die Anbindung des Dämpfers an die Aufnahme weist so eine besonders hohe Steifigkeit auf.

Bevorzugt ist der Dämpfer Bestandteil einer Radaufhängung des Kraftfahrzeugs. Er hat dann die Funktion eines Stoßdämpfers. Durch die erfindungsgemäße Gestaltung des Kontaktbereichs zwischen dem Dämpfer und der Aufnahme ergibt sich eine Verbesserung hinsichtlich Fahrkomfort, Fahrdynamik und Akustik aufgrund einer höheren Steifigkeit der Anbindung des Dämpfers an die Karosserie.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: einen Schnitt durch eine Federbeinaufnahme einer Kraftfahrzeugkarosserie mit einem Federbein und
- Fig. 2: eine perspektivische Ansicht einer Anlagelagefläche des Federbeins.

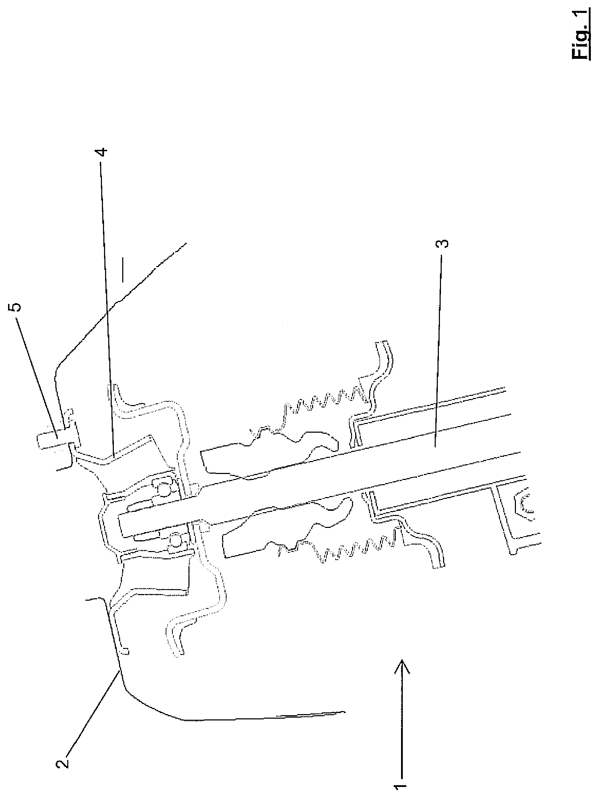

In Fig. 1 ist ein Federbein 1 einer hinteren Radaufhängung zu sehen, das mit seinem oberen Ende an einer Federbeinaufnahme 2 der Karosserie eines Personenkraftfahrzeugs verbunden ist. Die Federbeinaufnahme 2 bildet die karosserieseitige Aufnahme für das Federbein 1. Sie ist ein Druckgussbauteil aus einem Leichtmetall. Das Federbein 1 weist eine Kolbenzylinderanordnung 3 als Dämpfer und eine koaxial dazu angeordnete Schraubenfeder auf. Dadurch beträgt das Verhältnis zwischen Einfederweg und Dämpferbewegung 1:1. Das Federbein 1 weist an seinem oberen Endbereich ein tellerförmiges Stützlager 4 auf, das zur Befestigung des Federbeins 1 mit der Federbeinaufnahme 2 dreifach mit drei Schrauben 5 in Längsrichtung des Federbeins 1 verschraubt ist. Die Anlagefläche zwischen dem tellerförmigen Stützlager 4 und der Federbeinaufnahme 2 ist ringförmig. Die drei Schrauben 5 sind radial gleichmäßig über die ringförmige Anlagefläche verteilt angeordnet. Bei einer konventionellen Verschraubung würden sich zwischen dem Stützlager 4 und der Federbeinaufnahme 2 in der Anlagefläche Bereiche mit undefinierter und geringer Flächenpressung ergeben. Dies resultiert daraus, dass nur in unmittelbarer Nähe der Schrauben 5 eine optimale Anbindung der verschraubten Komponenten durch Flächenpressung besteht. Flächenbereiche dagegen, die sich nicht in der unmittelbaren Nähe der Verschraubung befinden, weisen bei Belastung nicht die gleichen Eigenschaften auf, wie die Bereiche in Verschraubungsnähe. Diese Bereiche führen dazu, dass bei Belastung ein lokales Abheben des Stützlagers 4 von der Federbeinaufnahme 2 stattfindet. Diese Gegebenheiten bringen negative Folgen in Bezug auf die Eigenschaften mit sich. Bereits im unbelasteten Zustand können aufgrund der Ebenheitstoleranzen beider Bauteile Undichtigkeiten vorhanden sein. Wird das Anbindungssystem zudem noch belastet (Einfedern, Ausfedern), vergrößern sich bereits vorhandene Spalten zwischen dem Stützlager 4 des Federbeins 1 und der Federbeinaufnahme 2 und verschlimmern das Problem durch Verschiebungen zwischen den beiden Bauteilen. Das Abheben und Zusammendrücken durch die Belastung ruft eine Pumpwirkung hervor. Diese Pumpwirkung führt dazu, dass Feuchtigkeit und Schmutz zwischen die Anlageflächen gesaugt wird. Aus der akustischen Sicht führt dieses Zusammendrücken und Abheben ebenfalls zu Klappergeräuschen.

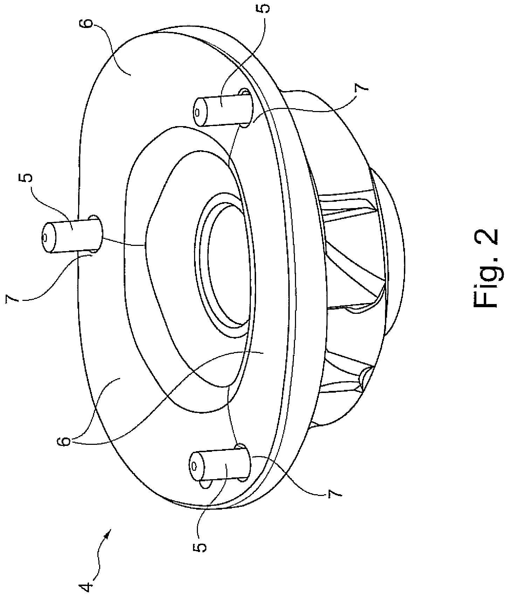

Um dies zu vermeiden, weist das tellerförmige Stützlager 4 des Federbeins 1 eine Bombierung auf - wie es in Fig. 2 gut erkennbar ist. Dazu wechseln sich bei der ringförmigen Anlagefläche des Stützlagers 4 umlaufend Erhebungen 6 und Vertiefungen 7 ab. Die Anlagefläche der Federbeinaufnahme 2 dagegen ist plan. Die drei Verschraubungsstellen sind jeweils in einer Vertiefung 7 angeordnet, sodass das tellerförmige Stützlager 4 im unbelasteten Zustand vor dem Verschrauben mit der Federbeinaufnahme 2 nur mit den Erhebungen 6 an der Federbeinaufnahme 2 anliegt. Der Spalt zwischen dem tellerförmigen Stützlager 4 und der Federbeinaufnahme 2 im Bereich der Verschraubungsstellen beträgt dabei zwischen minimal 0,2 mm und maximal 1,5 mm. Beim Verschrauben verspannen sich das tellerförmige Stützlager 4 und die Federbeinaufnahme 2 so zueinander, dass nach dem Verschrauben das Stützlager 4 umlaufend großflächig an der Federbeinaufnahme 2 anliegt. Auch die Bereiche der ursprünglichen Vertiefungen 7 liegen dann an der Federbeinaufnahme 2 flächig an.

Dies wirkt sich natürlich auch auf die Funktion aus. Es entsteht eine definierte und lineare Kraftübertragung zwischen dem tellerförmigen Stützlager 4 und damit dem Federbein 1 und der Federbeinaufnahme 2 und damit der Karosseriestruktur. Beim Ausfedern hebt sich das tellerförmige Stützlager 4 dadurch nicht mehr von der Federbeinaufnahme 2 lokal ab. Es entstehen sowohl unter Zugbelastung als auch unter Druckbelastung keine Spalte mehr zwischen dem Stützlager 4 und der Federbeinaufnahme 2. Nicht nur die Bereiche unmittelbar an den Schrauben 5 weisen eine optimale Flächenpressung und dadurch keine Spalte auf, sondern die komplette Anlagefläche des Stützlagers 4 weist eine definierte Flächenpressung gegenüber der Federbeinaufnahme 2 auf. Die Bombierung erzeugt aufgrund ihrer Form eine annähernd gleichmäßige Vorspannung zwischen den beiden Partnern bereits im unbelasteten Zustand. Dadurch ist die Anbindungssteifigkeit deutlich höher als ohne Bombierung. Daraus folgt eine bessere Linearität bezüglich des Ansprechverhaltens des Federbeins 1 und eine längere Lebensdauer und bessere Dichtigkeit der Anbindung.

## Patentansprüche

1. Kraftfahrzeug mit zumindest einer karosserieseitigen Aufnahme (2) zur Anbindung eines Dämpfers (3), wobei der Dämpfer (3) mit der Aufnahme (2) mit zwei oder mehr Schrauben (5) verschraubbar ist, **dadurch gekennzeichnet, dass** die Anlagefläche zwischen der Aufnahme (2) und dem Dämpfer (3) so gestaltet ist, dass bei an der Aufnahme (2) anliegendem Dämpfer (3) im unbelasteten Zustand vor dem Verschrauben im Bereich der Verschraubungsstellen zwischen dem Dämpfer (3) und der Aufnahme (2) sich jeweils ein Spalt befindet, der nach dem Verschrauben aufgrund einer elastischen Verformung der Aufnahme (2) und / oder des Dämpfers (3) geschlossen ist, wobei die Anlagefläche der Aufnahme (2) ringförmig ist, und wobei die Verschraubungen radial gleichmäßig verteilt angeordnet sind, und wobei die Anlagefläche umlaufend abwechselnd Erhebungen (6) und Vertiefungen (7) aufweist, und wobei die Verschraubungsstellen in Vertiefungen (7) angeordnet sind, sodass der Dämpfer (3) im unbelasteten Zustand vor dem Verschrauben an den Erhebungen (6) anliegt, während nach dem Verschrauben der Dämpfer (3) großflächig an der gesamten ringförmigen Anlagefläche der Aufnahme (2) anliegt.

2. Kraftfahrzeug nach Anspruch 1, **dadurch gekennzeichnet, dass** die Anlagefläche eine Bombierung aufweist.

3. Kraftfahrzeug nach einem der vorhergehenden Ansprüche, **dadurch gekennzeichnet, dass** der Spalt vor dem Verschrauben im Bereich der Verschraubungsstellen zwischen dem Dämpfer (3) und der Aufnahme (2) zwischen minimal 0,2 mm und maximal 1,5 mm groß ist.

4. Kraftfahrzeug nach einem der vorhergehenden Ansprüche, **dadurch gekennzeichnet, dass** der Dämpfer (3) Bestandteil einer Radaufhängung des Kraftfahrzeugs ist.

5. Kraftfahrzeug nach einem der vorhergehenden Ansprüche, **dadurch gekennzeichnet, dass** die Aufnahme (2) ein Druckgussbauteil aus einem Leichtmetall ist.

6. Kraftfahrzeug nach einem der vorhergehenden Ansprüche, **dadurch gekennzeichnet, dass** der Dämpfer (3) mit einer Feder in einem sogenannten Federbein (1) kombiniert ist.

## Claims

1. A motor vehicle having at least one mount (2) on the vehicle body for connecting a damper (3), wherein the damper (3) can be screwed together with the mount (2) by two or more screws (5), **characterised in that** the contact surface between the mount (2) and the damper (3) is configured such that when the damper (3) is resting on the mount (2) in an unloaded state before the screwing procedure, there is located in the region of the screwing points between the damper (3) and the mount (2) a respective gap which is closed after screwing due to an elastic deformation of the mount (2) and/or of the damper (3), wherein the contact surface of the mount (2) is annular, and wherein the screw connections are arranged such that they are distributed in a radially uniform manner, and wherein the contact surface alternately has elevations (6) and recesses (7) around the periphery, and wherein the screwing points are arranged in recesses (7) so that when the damper (3) is in an unloaded state before the screwing procedure, it rests on the elevations (6), whereas after the screwing procedure, the damper (3) rests extensively on the entire annular contact surface of the mount (2).

2. A motor vehicle according to claim 1, **characterised in that** the contact surface has a camber.

3. A motor vehicle according to either of the preceding claims, **characterised in that** before the screwing procedure, the gap in the region of the screwing points between the damper (3) and the mount (2) is between at least 0.2 mm and at most 1.5 mm.

4. A motor vehicle according to any one of the preceding claims, **characterised in that** the damper (3) is part of a wheel suspension of the motor vehicle.

5. A motor vehicle according to any one of the preceding claims, **characterised in that** the mount (2) is a pressure die-cast component comprising a light metal.

6. A motor vehicle according to any one of the preceding claims, **characterised in that** the damper (3) is combined with a spring in a so-called suspension strut (1).

## Revendications

1. Véhicule comprenant au moins un logement de réception (2) situé côté carrosserie destiné à permettre la fixation d'un amortisseur (3), cet amortisseur (3) pouvant être vissé dans le logement (2) par l'intermédiaire de deux ou d'un plus grand nombre de vis (5), **caractérisé en ce que**
la surface d'appui entre le logement de réception (2) et l'amortisseur (3) est réalisée de sorte que, lorsque l'amortisseur (3) est situé dans le logement de réception (2) à l'état non chargé avant le vissage, il y a, dans la zone des emplacements de vissage, entre l'amortisseur (3) et le logement de réception (2) une fente respective qui, après le vissage est fermée en raison d'une déformation élastique du logement de réception (2) et/ou de l'amortisseur (3), la surface d'appui du logement de réception (2) étant annulaire et les vissages étant uniformément répartis radialement, la surface d'appui comportant alternativement des bossages (6) et des cavités (7) périphériques, et les emplacements de vissage étant situés dans les cavités (7) de sorte que, à l'état non chargé avant le vissage, l'amortisseur (3) s'applique sur les bossages (6) alors qu'après vissage, l'amortisseur (3) s'applique par une grande surface sur la totalité de la surface d'appui annulaire du logement de réception (2).

2. Véhicule conforme à la revendication 1,
**caractérisé en ce que**
la surface d'appui comprend un bombage.

3. Véhicule conforme à l'une des revendications précédentes, **caractérisé en ce que**,
avant vissage, l'intervalle entre l'amortisseur (3) et le logement de réception (2) dans la zone des emplacements de vissage à un dimension minimum de 0,2 mm et une dimension maximum de 1,5 mm.

4. Véhicule conforme à l'une des revendications précédentes, **caractérisé en ce que**,
l'amortisseur (3) est une partie d'une suspension de roue du véhicule.

5. Véhicule conforme à l'une des revendications précédentes, **caractérisé en ce que**
le logement de réception (2) est un élément moulé sous pression en un métal léger.

6. Véhicule conforme à l'une des revendications précédentes, **caractérisé en ce que**,
l'amortisseur (3) est combiné à un ressort selon un élément dit « jambe de force (1) ».
